# EUROPEAN PATENT SPECIFICATION

(11) **EP 4 527 591 B1**
(45) Date of publication and mention of the grant of the patent: **28.10.2026**
(21) Application number: 24186257.2
(22) Date of filing: 03.07.2024
(51) Int. Cl.: B29C 53/60, B29C 53/82, B29C 70/16, B29C 70/32, B29C 70/34, B29C 70/38, B29C 70/44, B29C 70/86, B32B 1/08, B32B 5/12, B32B 5/26, F16J 12/00, F17C 1/06, B29D 22/00, B29L 31/00

(54) **COMPOSITE PRESSURE HULL AND METHODS OF FORMING**
VERBUNDDRUCKKÖRPER UND HERSTELLUNGSVERFAHREN
COQUE DE PRESSION COMPOSITE ET PROCÉDÉS DE FORMATION

(30) Priority: 22.09.2023 US 202363584684 P; 30.05.2024 US 202418678731
(43) Date of publication of application: 26.03.2025
(73) Proprietor: The Boeing Company, Arlington, VA 22202 (US)
(72) Inventor: Goldberg, James, Arlington, 22202 (US); Johnson, Brice Aaron, Arlington, 22202 (US); Negley, Mark Alan, Arlington, 22202 (US); Blom-Schieber, Adriana Willempje, Arlington, 22202 (US); Iqbal, Jaffar Sher, Arlington, 22202 (US); Zgherea, Lisa C., Arlington, 22202 (US)
(74) Representative: Witte, Weller & Partner Patentanwälte mbB

(56) References cited:
- WO-A1-92/20954
- JP-A- 2001 074 199
- US-A- 5 211 306
- US-A1- 2007 205 201

## Description

### BACKGROUND INFORMATION

### 1. Field:

The present disclosure relates generally to composite manufacturing and more specifically to manufacturing a composite pressure hull.

### 2. Background:

Reducing weight is a concern for the storage, manufacture, or transport of different structures. Weight can also affect the performance and structural efficiency of some composite structures. For example, it is desirable to reduce the weight of aircraft components such as fuel tanks. To reduce weight of components, such as pressure tanks, it can be desirable to manufacture components from composite materials.

Composite materials are strong, light-weight materials created by combining two or more functional components. For example, a composite material may include reinforcing fibers bound in polymer resin matrix. The fibers can take the form of a unidirectional tape, woven cloth or fabric, or a braid. The mechanical properties and other material properties of composite materials can be desirable for some implementations. For example, buoyancy of composite materials can be more desirable for submersible applications.

Therefore, it would be desirable to have a method and apparatus that takes into account at least some of the issues discussed above, as well as other possible issues.

Document US 2007/205201 A1, according to its abstract, states a pressure vessel and method for producing a pressure vessel is disclosed. The pressure vessel comprises a liner shell fabricated from composite material applied to a soluble mandrel having a body shaped to pattern an interior of the pressure vessel, the liner shell having an opening, a hoss having an aperture therethrough, the boss sealingly bonded to the liner shell with the aperture adjacent the opening, and an outer shell fabricated from plies of composite material filament impregnated with matrix material wound over the liner shell and the boss, but not over the aperture.

### SUMMARY

An embodiment of the present disclosure provides a method of forming a composite pressure hull. A unitary first half of the composite pressure hull is laid up. A unitary second half of the composite pressure hull is laid up. The unitary first half is joined to the unitary second half to form the composite pressure hull. The method comprises joining the unitary first half to the unitary second half comprises adhering or mechanically fastening a ring to both the unitary first half and the unitary second half, wherein the ring comprises a metal.

A further embodiment of the present disclosure provides a composite pressure hull. The composite pressure hull comprises a unitary first half and a unitary second half. The unitary first half of the composite pressure hull comprises a dome portion and a cylindrical portion with a transition region comprising a joint formed during layup between the dome portion and the cylindrical portion. The unitary second half of the composite pressure hull comprises a second dome portion and a second cylindrical portion with a second transition region comprising a second joint formed during layup between the second dome portion and the second cylindrical portion. A ring is adhered or mechanically fastened between the cylindrical portion and the second cylindrical portion, wherein the ring comprises metal.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a block diagram of a manufacturing environment in accordance with an illustrative embodiment;
**Figure 2** is an illustration of an isometric view of a unitary first half of a composite pressure hull in accordance with an illustrative embodiment;
**Figure 3** is an illustration of sets of composite plies relative to a mandrel in accordance with an illustrative embodiment;
**Figure 4** is an illustration of an isometric view of a composite pressure hull in accordance with an illustrative embodiment;
**Figure 5** is a flowchart of a method of forming a composite pressure hull in accordance with an illustrative embodiment;
**Figure 6** is a flowchart of a method of forming a composite pressure hull in accordance with an illustrative embodiment;
**Figure 7** is an illustration of an aircraft manufacturing and service method in a form of a block diagram in accordance with an illustrative embodiment; and
**Figure 8** is an illustration of an aircraft in a form of a block diagram in which an illustrative embodiment may be implemented.

### DETAILED DESCRIPTION

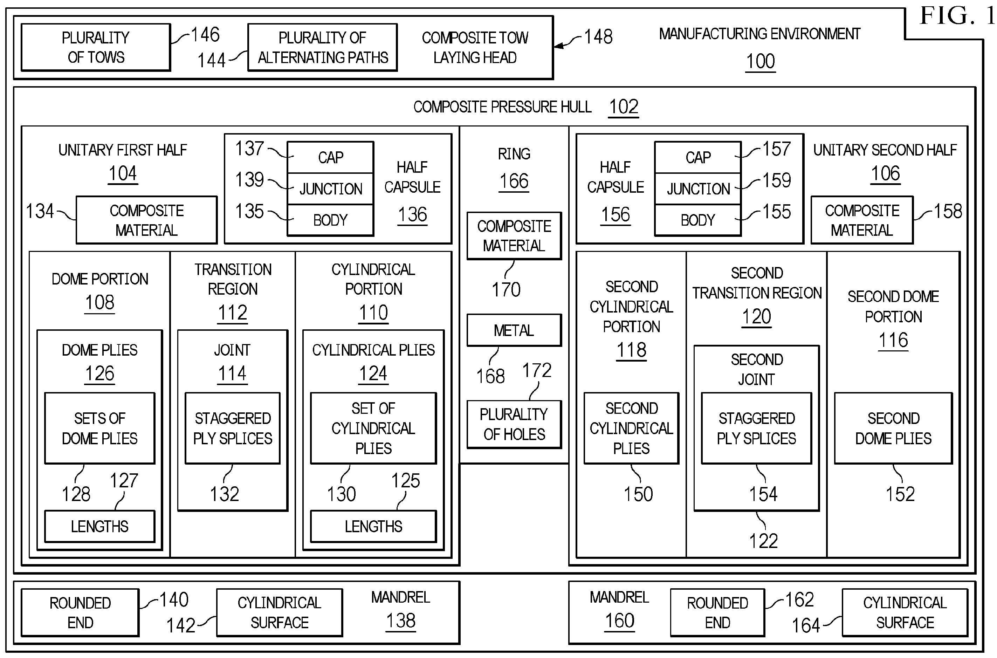

Turning now to **Figure 1****,** an illustration of a block diagram of a manufacturing environment is depicted in accordance with an illustrative embodiment. Composite pressure hull **102** can be formed in manufacturing environment **100.** Composite pressure hull **102** comprises unitary first half **104** of composite pressure hull **102** and unitary second half **106** of composite pressure hull **102.** Unitary first half **104** comprises dome portion **108** and cylindrical portion **110** with transition region **112** comprising joint **114** formed during layup between dome portion **108** and cylindrical portion **110.** Unitary second half **106** of composite pressure hull **102** comprises second dome portion **116** and second cylindrical portion **118** with second transition region **120** comprising second joint **122** formed during layup between second dome portion **116** and second cylindrical portion **118.**

Dome portion **108** comprises dome plies **126** laid up on rounded end **140** of mandrel **138.** Dome plies **126** are laid up entirely on rounded end **140** of mandrel **138.** Cylindrical portion **110** comprises cylindrical plies **124** laid up on cylindrical surface **142.** At least one cylindrical ply of cylindrical plies **124** extends onto rounded end **140** of mandrel **138.** Portions of cylindrical plies **124** that extend onto rounded end **140** form transition region **112.**

In some illustrative examples, a cylindrical ply of cylindrical plies **124** is a composite ply that is generally started on cylindrical surface **142** and transitions to a portion of rounded end **140** of mandrel **138.** In some illustrative examples, many of cylindrical plies **124** will continue onto rounded end **140** of mandrel **138.** In some illustrative examples, all of cylindrical plies **124** will continue onto rounded end **140** of mandrel **138.** Material characteristics of dome plies **126** may be undesirable at the edge of rounded end **140** where rounded end **140** meets cylindrical surface **142.** Accordingly, dome plies **126** can be laid up on rounded end **140** and terminate prior to an intersection with cylindrical surface **142.**

Transition region **112** comprises cylindrical plies **124** of cylindrical portion **110** and dome plies **126** of dome portion **108.** In some illustrative examples, transition region **112** is formed on rounded end **140** of mandrel **138.**

In some illustrative examples, joint **114** is formed within transition region **112.** In some illustrative examples, joint **114** takes the form of at least one scarf joint. In some illustrative examples, joint **114** takes the form of staggered ply splices **132.** In some illustrative examples, joint **114** is formed by staggering lengths **127** of dome plies **126.** In some illustrative examples, joint **114** is formed by staggering lengths **125** of cylindrical plies **124.** In some illustrative examples, joint **114** comprises overlapping sets of dome plies **128** and sets of cylindrical plies **130.** As used herein, a "set of" items is one or more items. Accordingly, each set of sets of dome plies **128** comprises one or more dome plies. Each set of sets of cylindrical plies **130** comprises one or more cylindrical plies. In some illustrative examples, joint **114** is formed by a series of abutting sets of dome plies **128** and sets of cylindrical plies **130.**

In some illustrative examples, joint **114** comprises abutting plies between sets of dome plies **128** and sets of cylindrical plies **130.** In some illustrative examples, joint **114** comprises slightly gapping sets of dome plies **128** and sets of cylindrical plies **130.**

In some illustrative examples, transition region **112** has a series of joints between plies at the same thickness. In these illustrative examples, transition region **112** includes at least one additional joint in addition to joint **114.** In some illustrative examples, transition region **112** comprises a set of joints, including joint **114,** that are staggered through the thickness of unitary first half **104** and separated to minimize repetition at any location within transition region **112.**

In some illustrative examples, laying up dome plies **126** and cylindrical plies **124** comprises alternatively laying up sets of dome plies **128** and sets of cylindrical plies **130** to form joint **114.** Each set of plies for both the sets of dome plies **128** and sets of cylindrical plies **130** comprises any desirable quantity, any desirable fiber angle, and any desirable size of composite plies. The quantity of plies, fiber angle, and size of plies is based on a design for unitary first half **104.** Each set of plies has its own independent order of plies, quantity of plies, fiber angles, and size of plies.

In some illustrative examples, a set of plies comprises more than one ply. In some illustrative examples, a set of plies comprises more than one size of ply. In some illustrative examples, a set of plies comprises more than one fiber angle.

As each set of plies can have any desirable characteristics, a subsequently laid set of plies can have at least one of a different quantity of plies, different fiber angles, or different sizes of plies than a previously laid set of plies.

Thus, laying up dome plies **126** and laying up of cylindrical plies **124** is performed in concert to form transition region **112.** In some illustrative examples, a dome ply of dome plies **126** can be laid up at the same time as a cylindrical ply of cylindrical plies **124.** In some illustrative examples, a single automated fiber layup head, such as composite tow laying head **148,** can be used to alternatingly lay-up dome plies **126** and cylindrical plies **124.**

Dome plies **126** and cylindrical plies **124** are laid up and cured on mandrel **138.** After curing, unitary first half **104** is half capsule **136** that can be joined to unitary second half **106** to form composite pressure hull **102.** Half capsule **136** is formed without any openings or holes in dome plies **126.** In some illustrative examples, half capsule **136** is formed without any openings or holes aside from the opening of half capsule **136** formed by cylindrical plies **124.**

Half capsule **136** comprises body **135** and cap **137** with junction **139** between body **135** and cap **137.** In some illustrative examples, junction **139** is a location in which the curvature changes. In some illustrative examples, body **135** is formed entirely by cylindrical portion **110.** In some illustrative examples, cap **137** includes transition region **112.** In some illustrative examples, cap **137** comprises dome portion **108,** transition region **112,** and a fraction of cylindrical portion **110.**

Unitary first half **104** is formed of composite material **134.** Composite material **134** is laid up by composite tow laying head **148** by laying down plurality of tows **146.**

Plurality of tows **146** are laid up on rounded end **140** of mandrel **138** to form dome plies **126.** Plurality of tows **146** is laid up on cylindrical surface **142** to form cylindrical plies **124.** In some illustrative examples, at least one cylindrical ply of cylindrical plies **124** comprises laying up plurality of tows **146** on cylindrical surface **142** and extending partially onto rounded end **140** of mandrel **138.**

Unitary second half **106** comprises second cylindrical portion **118** and second dome portion **116** with second transition region **120** between second cylindrical portion **118** and second dome portion **116.** Second transition region **120** comprises second cylindrical plies **150** of second cylindrical portion **118** and second dome plies **152** of second dome portion **116.** In some illustrative examples, second transition region **120** comprises second joint **122.**

In some illustrative examples, second joint **122** takes the form of at least one scarf joint. In some illustrative examples, second joint **122** takes the form of staggered ply splices **154.** In some illustrative examples, second joint **122** is formed by staggering lengths of second dome plies **152.** In some illustrative examples, second joint **122** is formed by staggering lengths of second cylindrical plies **150.** In some illustrative examples, second joint **122** comprises overlapping sets of dome plies and sets of cylindrical plies. In some illustrative examples, second joint **122** is formed by a series of abutting sets of second dome plies and sets of second cylindrical plies.

In some illustrative examples, laying up second dome plies **152** and second cylindrical plies **150** comprises alternatively laying up sets of second dome plies and sets of second cylindrical plies to form second joint **122.** Each set of plies comprises any desirable quantity, any desirable fiber angle, and any desirable size of composite plies. The quantity of plies, fiber angle, and size of plies is based on a design for unitary second half **106.**

Laying up second dome plies **152** and laying up of second cylindrical plies **150** is performed in concert to form second transition region **120.** In some illustrative examples, a dome ply of second dome plies **152** can be laid up at the same time as a cylindrical ply of second cylindrical plies **150.** In some illustrative examples, a single automated fiber layup head, such as composite tow laying head **148,** can be used to alternatingly lay-up second dome plies **152** and second cylindrical plies **150.**

Second dome plies **152** and second cylindrical plies **150** are laid up and cured on a same mandrel. In some illustrative examples, unitary second half **106** can be formed on a same mandrel as unitary first half **104,** mandrel **138.** In some illustrative examples, unitary second half **106** can be formed on rounded end **140** and cylindrical surface **142** of mandrel **138** before or after forming unitary first half **104** on mandrel **138.** In some illustrative examples, unitary second half **106** is formed on a different mandrel than unitary first half **104.** In some illustrative examples, unitary second half **106** is laid up and cured on mandrel **160.**

Second dome portion **116** is laid up on a rounded end of a mandrel, such as either mandrel **138** or mandrel **160.** Second dome portion **116** is laid up entirely on a rounded end of a mandrel. Second cylindrical portion **118** is laid up on a cylindrical surface of a mandrel, such as either mandrel **138** or mandrel **160.** At least one cylindrical ply of second cylindrical portion **118** extends onto a rounded end of the mandrel. Ends of second cylindrical portion **118** that extend onto the rounded end form second transition region **120.**

In some illustrative examples, a cylindrical ply of second cylindrical portion **118** is a composite ply that is generally started on a cylindrical surface, such as cylindrical surface **142,** and transitions to a portion of a rounded end, such as rounded end **140** of mandrel **138.** In some illustrative examples, many of second cylindrical plies **150** of second cylindrical portion **118** will continue onto rounded end **140** of mandrel **138.** In some illustrative examples, all second cylindrical plies **150** of second cylindrical portion **118** will continue onto rounded end **140** of mandrel **138.** Material characteristics of second dome plies **152** may be undesirable at the edge of rounded end **140** where rounded end **140** meets cylindrical surface **142.** Accordingly, second dome plies **152** can be laid up on rounded end **140** and terminate prior to an intersection with cylindrical surface **142.**

After curing, unitary second half **106** is half capsule **156** that can be joined to unitary first half **104** to form composite pressure hull **102.** Half capsule **156** is formed without any openings or holes in second dome plies **152.** In some illustrative examples, half capsule **156** is formed without any openings or holes aside from the opening of half capsule **156** formed by second cylindrical plies **150.**

Half capsule **156** comprises body **155** and cap **157** with junction **159** between body **155** and cap **157.** In some illustrative examples, junction **159** is a location in which the curvature changes. In some illustrative examples, body **155** is formed entirely by second cylindrical portion **118.** In some illustrative examples, cap **157** includes second transition region **120.** In some illustrative examples, cap **157** comprises second dome portion **116,** second transition region **120,** and a fraction of second cylindrical portion **118.**

Unitary second half **106** is formed of composite material **158.** In some illustrative examples, composite material **158** is laid up by composite tow laying head **148** by laying down plurality of tows **146.** In some other illustrative examples, composite material **158** can be laid up by a different composite tow laying head than laid up unitary first half **104.**

In some illustrative examples, plurality of tows **146** is laid up on rounded end **162** of mandrel **160** to form second dome plies **152.** In some illustrative examples, plurality of tows **146** is laid up on cylindrical surface **164** to form second cylindrical plies **150.**

In some illustrative examples, unitary first half **104** has a same layup design as unitary second half **106.** In some illustrative examples, a same method is performed to layup unitary first half **104** and unitary second half **106.**

Laying up a ply of unitary first half **104** or unitary second half **106** comprises laying up plurality of alternating paths **144,** wherein each path of plurality of alternating paths **144** comprises plurality of tows **146.** For example, each dome ply of dome portion **108** will be laid up as a plurality of alternating paths, wherein each path comprises a plurality of tows. Likewise, each cylindrical ply of cylindrical portion **110** will be laid up as a plurality of alternating paths, wherein each path comprises a plurality of tows. In some illustrative examples, laying up unitary first half **104** of composite pressure hull **102** comprises laying up each cylindrical ply of cylindrical portion **110** as plurality of alternating paths **144,** wherein each path of plurality of alternating paths **144** comprises plurality of tows **146.**

Composite pressure hull **102** is formed by ring **166** joining cylindrical portion **110** and second cylindrical portion **118.** To form composite pressure hull **102,** ring **166** is adhered or mechanically fastened between cylindrical portion **110** and second cylindrical portion **118.** Ring **166** is provided for a location for access between composite pressure hull **102** and an environment outside of composite pressure hull **102.** In some illustrative examples, ring **166** comprises plurality of holes **172** to access interior of composite pressure hull **102.** Ring **166** comprises metal **168.**

The illustration of manufacturing environment **100** in **Figure 1** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, each ply of composite pressure hull **102** is laid up by a composite tow laying head, such as composite tow laying head **148.** In some illustrative examples, more than one composite tow laying head is used to lay up unitary first half **104** on mandrel **138.** In some illustrative examples, different composite tow laying heads are used to lay up unitary second half **106** than are used to lay up unitary first half **104.** Any desirable quantity of composite tow laying heads can be used to lay up unitary first half **104** and unitary second half **106** on mandrel **138** and/or mandrel **160.**

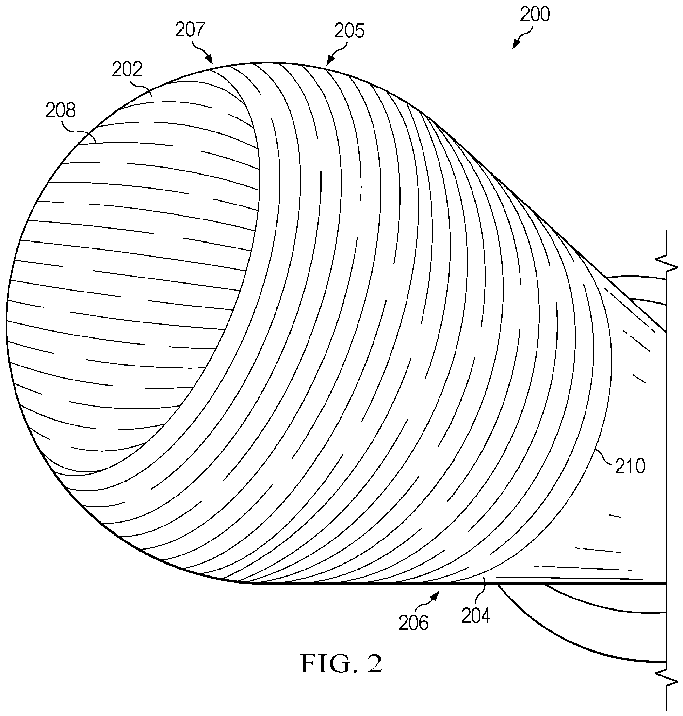

Turning now to **Figure 2** is an illustration of an isometric view of a unitary half of a composite pressure hull on a mandrel is depicted in accordance with an illustrative embodiment. Unitary half **200** is a physical implementation of one of unitary first half **104** or unitary second half **106** of **Figure 1****.**

Unitary half **200** is half of a composite pressure hull. Unitary half **200** comprises dome portion **202** and cylindrical portion **204.** Unitary half **200** further comprises transition region **205** comprising a joint **207** formed during layup between dome portion **202** and cylindrical portion **204.**

Unitary half **200** has been laid up on mandrel **206.** Unitary half **200** is formed by laying up dome plies **208** and cylindrical plies **210** on mandrel **206.** Dome plies **208** and cylindrical plies **210** are laid up in an alternating fashion to form transition region **205.** The alternating fashion of layup can have any desirable characteristics. Some portion of dome plies **208** are laid up prior to laying up a portion of cylindrical plies **210.** Any desired quantity and size of dome plies **208** can be laid up prior to laying up any desired quantity and size of cylindrical plies **210.**

Laying up of unitary half **200** can be described as alternatingly laying up sets of dome plies of dome plies **208** and sets of cylindrical plies of cylindrical plies **210.** Each set of plies for both the sets of dome plies and the sets of cylindrical plies comprises any desirable quantity, any desirable fiber angle, and any desirable size of composite plies. The quantity of plies, fiber angle, and size of plies is based on a design for unitary half **200.** Each set of plies has its own independent order of plies, quantity of plies, fiber angles, and size of plies.

In some illustrative examples, a set of plies comprises more than one ply. In some illustrative examples, a set of plies comprises more than one size of ply. In some illustrative examples, a set of plies comprises more than one fiber angle.

As each set of plies can have any desirable characteristics, a subsequently laid set of plies can have at least one of a different quantity of plies, different fiber angles, or different sizes of plies than a previously laid set of plies.

Thus, laying up dome plies **208** and laying up of cylindrical plies **210** is performed in concert to form transition region **205.** In some illustrative examples, a dome ply of dome plies **208** can be laid up at the same time as a cylindrical ply of cylindrical plies **210.** In some illustrative examples, a single automated fiber layup head can be used to alternatingly lay-up dome plies **208** and cylindrical plies **210.**

Dome plies **208** and cylindrical plies **210** are laid up and cured on mandrel **206.** After curing, unitary half **200** is a half capsule that can be joined to a unitary second half to form a composite pressure hull.

As can be seen in **Figure 2****,** unitary half **200** has a dome portion **202** without any openings or holes. Dome portion **202** completely covers a respective rounded end of mandrel **206.** Cylindrical portion **204** completely covers a respective cylindrical surface of mandrel **206.**

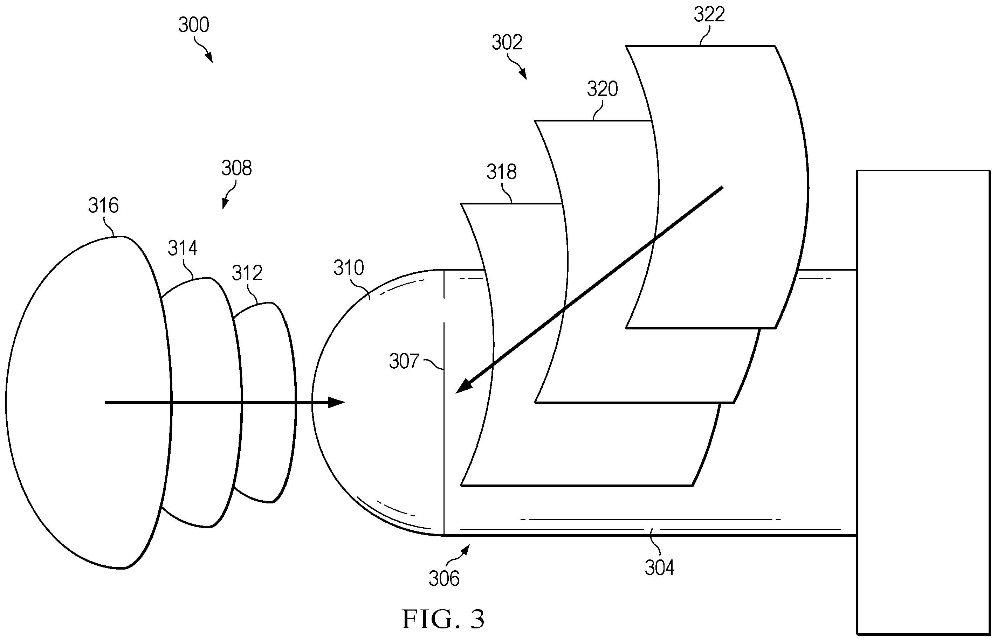

Turning now to **Figure 3****,** an illustration of sets of composite plies relative to a mandrel is depicted in accordance with an illustrative embodiment. In view **300,** sets of cylindrical plies **302** are depicted exploded over cylindrical surface **304** of mandrel **306.** In view **300,** sets of dome plies **308** are depicted exploded over rounded end **310** of mandrel **306.**

View **300** is only provided for ease of explanation. Each ply will be laid up not as a single sheet, but as a plurality of alternating paths, wherein each path of the plurality of alternating paths comprises a plurality of tows. Each ply is laid up by an automated fiber placement head laying up the plurality of alternating paths onto mandrel **306.** View **300** is provided for explanation of the concerted lay-up of dome plies and cylindrical plies to form a dome portion and a cylindrical portion of a unitary half such as unitary first half **104** or unitary second half **106** of **Figure 1****.** Sets of cylindrical plies **302** and sets of dome plies **308** can be used to lay up unitary half **200** of **Figure 2****.**

Sets of dome plies **308** comprises set of dome plies **312,** set of dome plies **314,** and set of dome plies **316.** Set of dome plies **312** comprises any desirable quantity of plies, any desirable fiber angles of plies, and any desirable size of plies. Set of dome plies **312** comprises one or more plies. Set of dome plies **312** comprises one or more fiber angles. Set of dome plies **312** comprises one or more ply sizes. Likewise, set of dome plies **314** and set of dome plies **316** comprises any desirable quantity of plies, any desirable fiber angles of plies, and any desirable size of plies.

As depicted, set of dome plies **312** is smaller than set of dome plies **314.** Set of dome plies **314** covers more of rounded end **310** of mandrel **306** than set of dome plies **312.** Differences in size between set of dome plies **312,** set of dome plies **314,** and set of dome plies **316** can be used to form a transition region between a dome portion and a cylindrical portion of a unitary half of a composite pressure hull.

As depicted, each of sets of dome plies **308** will cover a center of rounded end **310** of mandrel **306.** Accordingly, a resulting dome portion of a composite pressure hull will not have a center hole at the apex of the dome portion.

Each of sets of cylindrical plies **302** has a different length. For example, set of cylindrical plies **318** is larger than set of cylindrical plies **320.** Set of cylindrical plies **320** is longer than set of cylindrical plies **322.** Staggering the lengths of sets of cylindrical plies **302** can be done to form a transition region between a resulting dome portion and resulting cylindrical portion. Staggering the lengths of sets of cylindrical plies **302** can be done to form a joint with sets of dome plies **308.**

A resulting cylindrical portion comprising sets of cylindrical plies **302.** In some illustrative examples, at least one set of sets of cylindrical plies **302** extends over junction **307** between cylindrical surface **304** and rounded end **310** and onto rounded end **310** of mandrel **306.** Junction **307** is a location in which the curvature changes between cylindrical surface **304** and rounded end **310.**

Sets of cylindrical plies **302** and sets of dome plies **308** can be laid up in any desirable order. In some illustrative examples, each of sets of dome plies **308** is laid up prior to a respective set of cylindrical plies. In some other illustrative examples, more than one set of plies from either of sets of dome plies **308** or sets of cylindrical plies **302** is laid up prior to laying up plies from the other of sets of dome plies **308** or sets of cylindrical plies **302.**

In one illustrative example, set of dome plies **312** is laid up followed by set of cylindrical plies **318,** set of dome plies **314,** set of cylindrical plies **320,** set of dome plies **316,** and set of cylindrical plies **322.** In another illustrative example, set of dome plies **312** is laid up followed by set of dome plies **314,** set of cylindrical plies **318,** set of cylindrical plies **320,** set of dome plies **316,** and set of cylindrical plies **322.** Any desirable order of sets of plies can be laid up based on a design for the unitary half. Any desirable order of sets of plies can be laid up based on a design for the transition region within the unitary half.

Although view **300** is an exploded view, each ply of sets of cylindrical plies **302** is laid up as a plurality of alternating paths of a plurality of tows onto mandrel **306.** Sets of cylindrical plies **302** are not picked and placed as plies. Likewise, although view **300** is an exploded view, each ply of sets of dome plies **308** is laid up as a plurality of alternating paths of a plurality of tows onto mandrel **306.**

After curing, the unitary first half formed on mandrel **306** will have a half capsule shape. The half capsule shape will comprise a cap over rounded end **310** of mandrel **306,** a body over cylindrical surface **304** of mandrel **306,** and a junction connecting the cap and the body. The junction will be positioned at the connection between rounded end **310** and cylindrical surface **304** of mandrel **306.**

The cap of the half capsule shape of the unitary first half will comprise sets of dome plies **308.** The body of the half capsule shape of the unitary first half will comprise sets of cylindrical plies **302.** Ends of cylindrical plies will extend onto rounded end **310** and will form part of the cap in the unitary first half. The transition region formed between sets of dome plies **308** and sets of cylindrical plies **302** will be laid up on rounded end **310** and will be present in the cap.

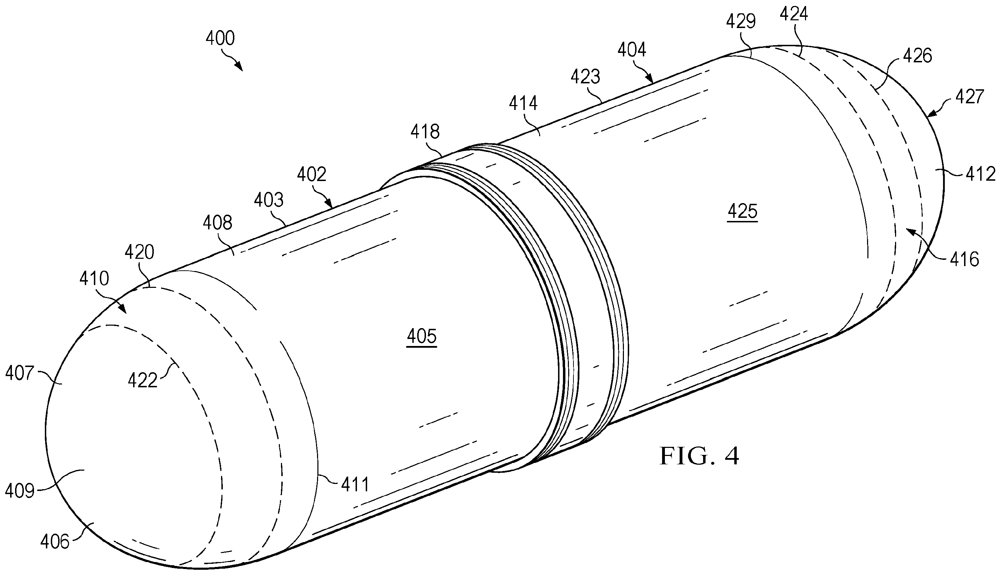

Turning now to **Figure 4****,** an illustration of an isometric view of a composite pressure hull is depicted in accordance with an illustrative embodiment. Composite pressure hull **400** is a physical implementation of composite pressure hull **102** of **Figure 1****.** One of unitary first half **402** or unitary second half **404** of composite pressure hull **400** can be the same as unitary half **200** of **Figure 2****.**

Composite pressure hull **400** comprises unitary first half **402** and unitary second half **404.** Unitary first half **402** comprises dome portion **406** and cylindrical portion **408** with transition region **410** comprising a joint formed during layup between dome portion **406** and cylindrical portion **408.** Transition region **410** comprises cylindrical plies of cylindrical portion **408** and dome plies of dome portion **406.**

Unitary first half **402** takes the form of half capsule **403** comprising body **405,** cap **407,** and junction **411** between body **405** and cap **407.** The curvature of half capsule **403** changes at junction **411** between body **405** and cap **407.**

In some illustrative examples, body **405** is formed entirely of cylindrical portion **408.** In some illustrative examples, cap **407** comprises transition region **410.** In some illustrative examples, cap **407** includes dome portion **406,** transition region **410,** and ends of cylindrical portion **408.**

Transition region **410** is positioned at any desirable location in unitary first half **402** between dome portion **406** and cylindrical portion **408.** The length of dome portion **406** can be adjusted based on a design of unitary first half **402.** Transition region **410** is located based on the length of dome portion **406.** In some illustrative examples, transition region **410** is formed on a respective rounded end of a mandrel. In some illustrative examples, transition region **410** is positioned between boundary **420** and boundary **422** in unitary first half **402.**

Dome portion **406** of composite pressure hull **400** does not have a center hole at apex **409** of dome portion **406.** In some illustrative examples, for a location system with an X-axis (0 degrees) extending through apex **409** and parallel to body **405** and a Y-axis (90 degrees) extending through junction **411,** transition region **410** can be positioned in the range of 45 degrees to 75 degrees.

Unitary second half **404** of composite pressure hull **400** comprises second dome portion **412** and second cylindrical portion **414** with second transition region **416** comprising a second joint formed during layup between second dome portion **412** and second cylindrical portion **414.** Second transition region **416** comprises cylindrical plies of second cylindrical portion **414** and dome plies of second dome portion **412.**

As depicted, unitary first half **402** is a half capsule. As depicted, unitary second half **404** is a half capsule. In some illustrative examples, unitary first half **402** has a same layup design as unitary second half **404.**

Unitary second half **404** takes the form of half capsule **423** comprising body **425,** cap **427,** and junction **429** between body **425** and cap **427.** The curvature of half capsule **423** changes at junction **429** between body **425** and cap **427.**

In some illustrative examples, body **425** is formed entirely of second cylindrical portion **414.** In some illustrative examples, cap **427** comprises second transition region **416.** In some illustrative examples, cap **407** includes second dome portion **412,** second transition region **416,** and ends of second cylindrical portion **414.**

Second transition region **416** is positioned at any desirable location in unitary second half **404** between second dome portion **412** and second cylindrical portion **414.** The length of second dome portion **414** can be adjusted based on a design of unitary second half **404.** Second transition region **416** is located based on the length of second dome portion **412.** In some illustrative examples, second transition region **416** is formed on a respective rounded end of a mandrel. In some illustrative examples, second transition region **416** is positioned between boundary **424** and boundary **426** in unitary second half **404.**

Second dome portion **412** of composite pressure hull **400** does not have a center hole at an apex of second dome portion **412.** In some illustrative examples, for a location system with an X-axis (0 degrees) extending through the apex and parallel to body **425** and a Y-axis (90 degrees) extending through junction **429,** second transition region **416** can be positioned in the range of 45 degrees to 75 degrees.

Composite pressure hull further comprises ring **418** between cylindrical portion **408** and second cylindrical portion **414.** Ring **418** is connected to cylindrical portion **408** and second cylindrical portion **414** in any desirable fashion. The ring **418** is mechanically fastened to or adhered between cylindrical portion **408** and second cylindrical portion **414.** The ring **418** comprises a metal. Ring **418** may be referred to as an interface ring. Ring **418** comprises a number of locations to receive inputs and outputs with an environment outside of composite pressure hull **400.**

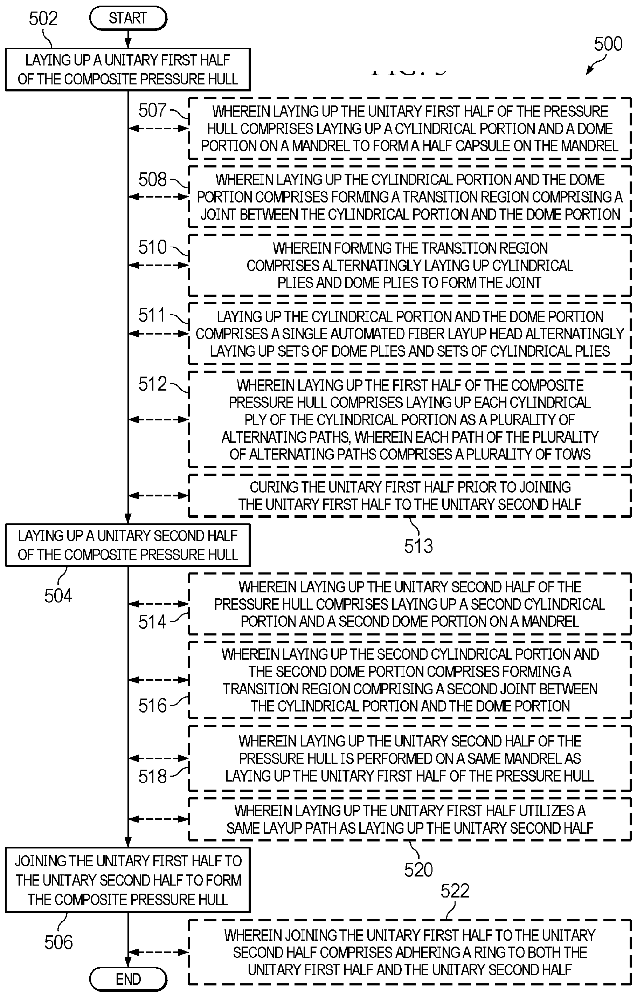

Turning now to **Figure 5****,** a flowchart of a method of forming a composite pressure hull is depicted in accordance with an illustrative embodiment. Method **500** can be performed to form a composite pressure hull, such as composite pressure hull **102** of **Figure 1****.** Method **500** can be performed to form unitary half **200** of **Figure 2****.** Method **500** can be performed using a unitary half laid up and cured on mandrel **306** of **Figure 3****.** Method **500** can be performed to form a composite pressure hull, such as composite pressure hull **400** of **Figure 4****.**

Method **500** lays up a unitary first half of the composite pressure hull (operation **502).** Method **500** lays up a unitary second half of the composite pressure hull (operation **504).** Method **500** joins the unitary first half to the unitary second half to form the composite pressure hull (operation **506).** Afterwards, method **500** terminates.

In some illustrative examples, laying up the unitary first half of the composite pressure hull comprises laying up a cylindrical portion and a dome portion on a mandrel to form a half capsule on the mandrel (operation **507).** In some illustrative examples, laying up the cylindrical portion and the dome portion comprises forming a transition region comprising a joint between the cylindrical portion and the dome portion (operation **508).** In some illustrative examples, the dome portion is laid up on a rounded end of the mandrel. In some illustrative example, the cylindrical portion is laid up on a cylindrical surface of the mandrel. In some illustrative examples, portions of at least a number of cylindrical plies of the cylindrical portion extend onto the rounded end of the mandrel. In some illustrative examples, the transition region is formed primarily on the rounded end of the mandrel. In some illustrative examples, the transition region is formed by cylindrical plies extending onto the rounded end of the mandrel.

The joint is formed simultaneously with forming the dome portion and the cylindrical portion. In these illustrative examples, the joint can take any desirable form. In some illustrative examples, the joint between the dome portion and the cylindrical portion at the same level can be gapped, butted, overlapped or something else. In some illustrative examples, the joint comprises two scarfs staggered through the thickness of the unitary first half.

In some illustrative examples, forming the transition region comprises alternatingly laying up cylindrical plies and dome plies to form the joint (operation **510).** Laying up dome plies and laying up cylindrical plies are performed in concert to form the transition region.

In some illustrative examples, laying up the unitary first half of the composite pressure hull comprises laying up each cylindrical ply of the cylindrical portion as a plurality of alternating paths, wherein each path of the plurality of alternating paths comprises a plurality of tows (operation **512).** In some illustrative examples, laying up the unitary first half of the composite pressure hull comprises laying up each dome ply of the dome portion as a plurality of alternating paths, wherein each path of the plurality of alternating paths comprises a plurality of tows. In some illustrative examples, laying up the cylindrical portion and the dome portion comprises a single automated fiber layup head alternatingly laying up sets of dome plies and sets of cylindrical plies (operation **511).**

In some illustrative examples, method **500** cures the unitary first half prior to joining the unitary first half to the unitary second half (operation **513).** In some illustrative examples, method **500** cures the unitary second half prior to joining the unitary first half to the unitary second half.

In some illustrative examples, laying up the unitary second half of the composite pressure hull comprises laying up a second cylindrical portion and a second dome portion on a mandrel (operation **514).** In some illustrative examples, laying up the second cylindrical portion and the second dome portion comprises forming a transition region comprising a second joint between the second cylindrical portion and the second dome portion (operation **516).** In some illustrative examples, laying up the unitary second half of the composite pressure hull comprises laying up each second cylindrical ply of the second cylindrical portion as a plurality of alternating paths, wherein each path of the plurality of alternating paths comprises a plurality of tows. In some illustrative examples, laying up the unitary second half of the composite pressure hull comprises laying up each second dome ply of the second dome portion as a plurality of alternating paths, wherein each path of the plurality of alternating paths comprises a plurality of tows.

In some illustrative examples, laying up the unitary second half of the composite pressure hull is performed on a same mandrel as laying up the unitary first half of the composite pressure hull (operation **518).** In some illustrative examples, laying up the unitary first half utilizes a same layup path as laying up the unitary second half (operation **520).**

Joining the unitary first half to the unitary second half comprises adhering or mechanically fastening a ring to both the unitary first half and the unitary second half (operation **522).** In some illustrative examples, the ring can also be referred to as a weldment ring. In some illustrative examples, the ring can also be referred to as an interface ring. The ring comprises metal.

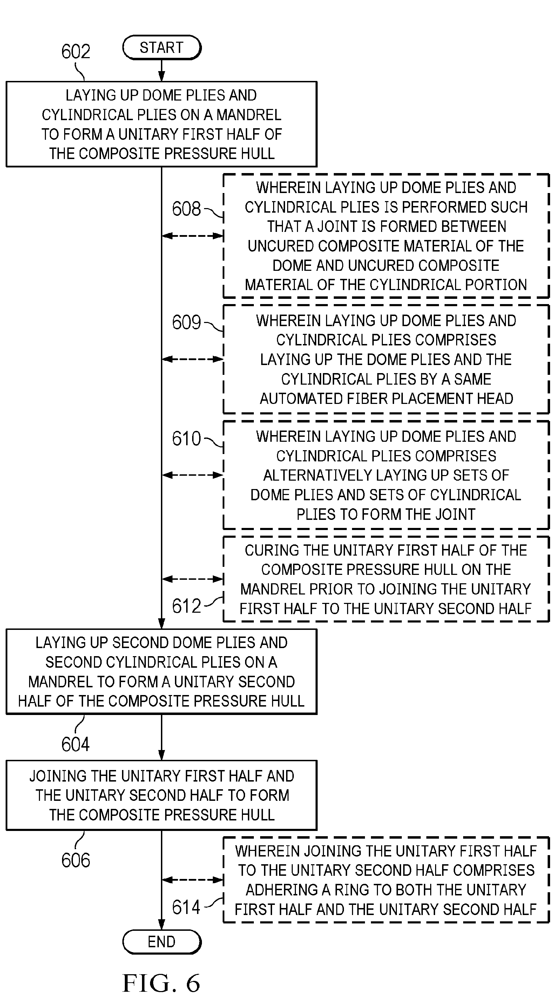

Turning now to **Figure 6****,** a flowchart of a method of forming a composite pressure hull is depicted in accordance with an illustrative embodiment. Method 600 can be performed to form a composite pressure hull, such as composite pressure hull **102** of **Figure 1****.** Method **600** can be performed to form unitary half **200** of **Figure 2****.** Method **500** can be performed using a unitary half laid up and cured on mandrel **306** of **Figure 3****.** Method **600** can be performed to form a composite pressure hull, such as composite pressure hull **400** of **Figure 4****.**

Method **600** lays up dome plies and cylindrical plies on a mandrel to form a unitary first half of the composite pressure hull (operation **602).** Method **600** lays up second dome plies and second cylindrical plies on a mandrel to form a unitary second half of the composite pressure hull (operation **604).** Method **600** joins the unitary first half and the unitary second half to form the composite pressure hull (operation **606).** Afterward, method **600** terminates.

In some illustrative examples, laying up dome plies and cylindrical plies is performed such that a joint is formed between uncured composite material of a dome portion and uncured composite material of a cylindrical portion (operation **608).** In these illustrative examples, the joint can take any desirable form. In some illustrative examples, the joint between the dome portion and the cylindrical portion at the same level can be at least one of gapped, butted, overlapped or something else. In some illustrative examples, the joint comprises two scarfs staggered through the thickness of the unitary first half. In some illustrative examples, laying up dome plies and cylindrical plies comprises laying up the dome plies and the cylindrical plies by a same automated fiber placement head (operation **609).**

In some illustrative examples, laying up dome plies and cylindrical plies comprises alternatively laying up sets of dome plies and sets of cylindrical plies to form the joint (operation **610).** By alternatively laying up sets of dome plies and sets of cylindrical plies, the transition region is formed of the dome plies and the cylindrical plies.

In some illustrative examples, method **600** cures the unitary first half of the composite pressure hull on the mandrel prior to joining the unitary first half to the unitary second half (operation **612).** Joining the unitary first half to the unitary second half comprises adhering or mechanically fastening a ring to both the unitary first half and the unitary second half (operation **614).**

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items. As used herein, "a set," when used with reference to items means one or more items. Thus, a set of plies includes one or more plies.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **508** through operation **522** may be optional. As another example, operation **608** through operation **614** may be optional.

The illustrative examples provide methods and designs for composite pressure hulls. In some illustrative examples, the composite pressure hull can be used in high pressure environments. In some illustrative examples, the composite pressure hull can be used as a submersible vehicle. In some illustrative examples, the composite pressure hull can be used to hold high pressure. In some illustrative examples, the composite pressure hull can be used to hold cryogenic fuel or other high pressure gaseous fuel. In some illustrative examples, the composite pressure hull can be used on an aircraft.

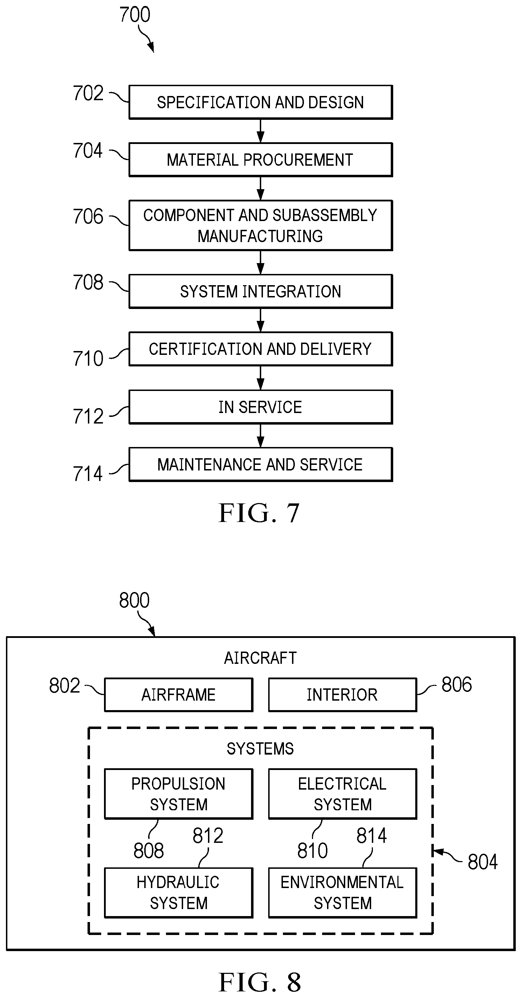

Illustrative embodiments of the present disclosure may be described in the context of aircraft manufacturing and service method **700** as shown in **Figure 7** and aircraft **800** as shown in **Figure 8****.** Turning first to **Figure 7****,** an illustration of an aircraft manufacturing and service method in a form of a block diagram is depicted in accordance with an illustrative embodiment. During pre-production, aircraft manufacturing and service method **700** may include specification and design **702** of aircraft **800** in **Figure 8** and material procurement **704.**

During production, component and subassembly manufacturing **706** and system integration **708** of aircraft **800** takes place. Thereafter, aircraft **800** may go through certification and delivery **710** in order to be placed in service **712.** While in service **712** by a customer, aircraft **800** is scheduled for routine maintenance and service **714,** which may include modification, reconfiguration, refurbishment, or other maintenance and service.

Each of the processes of aircraft manufacturing and service method **700** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 8****,** an illustration of an aircraft in a form of a block diagram is depicted in which an illustrative embodiment may be implemented. In this example, aircraft **800** is produced by aircraft manufacturing and service method **700** of **Figure 7** and may include airframe **802** with plurality of systems **804** and interior **806.** Examples of systems **804** include one or more of propulsion system **808,** electrical system **810,** hydraulic system **812,** and environmental system **814.** Any number of other systems may be included.

Apparatuses and methods embodied herein may be employed during at least one of the stages of aircraft manufacturing and service method **700.** One or more illustrative embodiments may be manufactured or used during at least one of component and subassembly manufacturing **706,** system integration **708,** in service **712,** or maintenance and service **714** of **Figure 7****.** For example, a fuel tank or other pressure vessel of aircraft **800** can be manufactured according to the illustrative examples.

Conventional composite pressure hulls have a hole at the apex of the dome for system integrations for fuel, etc. The illustrative examples provide a continuous dome composite structure. The cylinder and dome portion are integrated together through a joint, such as a scarf joint.

The illustrative examples provide a continuous, closed dome composite structure, along with an integration zone of the cylinder fibers and dome fibers. Two composite halves are fabricated and then joined at the root of the cylinder with a ring joint. In some illustrative examples, the ring joint is metallic. The illustrative examples provide the integration of a continuous dome and cylinder composite component.

## Claims

1. A method (500) of forming a composite pressure hull (102, 400) comprising:
laying up (502) a unitary first half (104, 402) of the composite pressure hull (102, 400);
laying up (504) a unitary second half (106, 404) of the composite pressure hull (102, 400); and
joining (506) the unitary first half (104, 402) to the unitary second half (106, 404) to form the composite pressure hull (102, 400), wherein (522) joining the unitary first half (104, 402) to the unitary second half (106, 404) comprises adhering or mechanically fastening a ring (166, 418) to both the unitary first half (104, 402) and the unitary second half (106, 404), wherein the ring (418) comprises a metal.

2. The method (500) of claim 1, wherein (506) laying up the unitary first half (104, 402) of the composite pressure hull (102, 400) comprises laying up a cylindrical portion (110, 204, 408) and a dome portion (108, 202, 408) on a mandrel (138, 206, 306) to form a half capsule (136) on the mandrel (138, 206, 306).

3. The method (500) of claim 2, wherein (508) laying up the cylindrical portion (110, 204, 408) and the dome portion (108, 202, 408) comprises forming a transition region (112, 205, 410) comprising a joint (114) between the cylindrical portion (110, 204, 408) and the dome portion (108, 202, 408).

4. The method (500) of claim 3, wherein (510) forming the transition region (112, 205, 410) comprises alternatingly laying up cylindrical plies (124, 210) and dome plies (126, 208) to form the joint (114).

5. The method (500) of any of claims 2 to 4, wherein (512) laying up the unitary first half (104, 402) of the composite pressure hull (102, 400) comprises laying up each cylindrical ply of the cylindrical portion (110, 204, 408) as a plurality of alternating paths (144), wherein each path of the plurality of alternating paths (144) comprises a plurality of tows (146).

6. The method of any of claim 2 to 5, wherein (511) laying up the cylindrical portion (110, 204, 408) and the dome portion (108, 202, 408) comprises a single automated fiber layup head (148) alternatingly laying up sets of dome plies (128, 308) and sets of cylindrical plies (130, 302).

7. The method (500) of any of claims 1 to 6, wherein (514) laying up the unitary second half (106, 404) of the composite pressure hull comprises laying up a second cylindrical portion and a second dome portion on a mandrel.

8. The method (500) of any of claims 1 to 7, wherein (518) laying up the unitary second half (106, 404) of the composite pressure hull (102, 400) is performed on a same mandrel (138, 206, 306) as laying up the unitary first half (104, 402) of the composite pressure hull (102, 400).

9. The method of any of claims 1 to 8, wherein (520) laying up the unitary first half (104, 402) utilizes a same layup path as laying up the unitary second half (106, 404).

10. The method (500) of any of claims 1 to 9, wherein the ring (418) is a weldment ring or an interface ring.

11. The method (500) of claims 10, wherein the interface ring (418) comprises a number of locations to receive inputs and outputs with an environment outside of composite pressure hull (102, 400).

12. A composite pressure hull (102, 400) comprising:
a unitary first half (104, 402) of the composite pressure hull (102, 400) comprising a dome portion (108, 202, 408) and a cylindrical portion (110, 204, 408) with a transition region (112, 205, 410) comprising a joint (114) formed during layup between the dome portion (108, 202, 408) and the cylindrical portion (110, 204, 408); and
a unitary second half (106, 404) of the composite pressure hull (102, 400) comprising a second dome portion (116, 412) and a second cylindrical portion (118, 414) with a second transition region (120, 416) comprising a second joint (122) formed during layup between the second dome portion (116, 412) and the second cylindrical portion (118, 414);
a ring (166, 418) adhered between or mechanically fastened to the cylindrical portion (110, 204, 408) and the second cylindrical portion (118, 414), wherein the ring (166, 418) comprises metal.

13. The composite pressure hull (102, 400) of claim 12, wherein the transition region (112, 205, 410) comprises cylindrical plies (124, 210) of the cylindrical portion (110, 204, 408) and dome plies (126, 208) of the dome portion (108, 202, 408).

14. The composite pressure hull (102, 400) of claim 12 or 13, wherein the unitary first half (104, 402) has a same layup design as the unitary second half (106, 404).

15. The composite pressure hull (102, 400) of any of claims 12 to 14, wherein ring (166) comprises a plurality of holes (172) to access interior of composite pressure hull (102).

## Patentansprüche

1. Verfahren (500) zum Formen eines Verbundwerkstoffdruckkörpers (102, 400), aufweisend:
Ablegen (502) einer einteiligen ersten Hälfte (104, 402) des Verbundwerkstoffdruckkörpers (102, 400);
Ablegen (504) einer einteiligen zweiten Hälfte (106, 404) des Verbundwerkstoffdruckkörpers (102, 400); und
Verbinden (506) der einteiligen ersten Hälfte (104, 402) mit der einteiligen zweiten Hälfte (106, 404), um den Verbundwerkstoffdruckkörper (102, 400) zu bilden, wobei (522) das Verbinden der einteiligen ersten Hälfte (104, 402) mit der einteiligen zweiten Hälfte (106, 404) das Ankleben oder mechanische Befestigen eines Rings (166, 418) sowohl an der einteiligen ersten Hälfte (104, 402) als auch an der einteiligen zweiten Hälfte (106, 404) aufweist, wobei der Ring (418) ein Metall aufweist.

2. Verfahren (500) nach Anspruch 1, wobei (506) das Ablegen der einteiligen ersten Hälfte (104, 402) des Verbundwerkstoffdruckkörpers (102, 400) das Ablegen eines zylindrischen Abschnitts (110, 204, 408) und eines Kuppelabschnitts (108, 202, 408) auf einem Dorn (138, 206, 306) aufweist, um eine Halbkapsel (136) auf dem Dorn (138, 206, 306) zu bilden.

3. Verfahren (500) nach Anspruch 2, wobei (508) das Ablegen des zylindrischen Abschnitts (110, 204, 408) und des Kuppelabschnitts (108, 202, 408) das Bilden eines Übergangsbereichs (112, 205, 410) aufweist, der eine Verbindung (114) zwischen dem zylindrischen Abschnitt (110, 204, 408) und dem Kuppelabschnitt (108, 202, 408) aufweist.

4. Verfahren (500) nach Anspruch 3, wobei (510) das Bilden des Übergangsbereichs (112, 205, 410) das abwechselnde Ablegen von zylindrischen Lagen (124, 210) und Kuppellagen (126, 208) aufweist, um die Verbindung (114) zu bilden.

5. Verfahren (500) nach einem der Ansprüche 2 bis 4, wobei (512) das Ablegen der einteiligen ersten Hälfte (104, 402) des Verbundwerkstoffdruckkörpers (102, 400) das Ablegen jeder zylindrischen Lage des zylindrischen Abschnitts (110, 204, 408) als eine Vielzahl von alternierenden Pfaden (144) aufweist, wobei jeder Pfad der Vielzahl von alternierenden Pfaden (144) eine Vielzahl von Rovings (146) aufweist.

6. Verfahren nach einem der Ansprüche 2 bis 5, wobei (511) das Ablegen des zylindrischen Abschnitts (110, 204, 408) und des Kuppelabschnitts (108, 202, 408) aufweist, dass ein einzelner automatisierter Faserablegekopf (148) abwechselnd Sätze von Kuppellagen (128, 308) und Sätze von zylindrischen Lagen (130, 302) ablegt.

7. Verfahren (500) nach einem der Ansprüche 1 bis 6, wobei (514) das Ablegen der einteiligen zweiten Hälfte (106, 404) des Verbundwerkstoffdruckkörpers das Ablegen eines zweiten zylindrischen Abschnitts und eines zweiten Kuppelabschnitts auf einem Dorn aufweist.

8. Verfahren (500) nach einem der Ansprüche 1 bis 7, wobei (518) das Ablegen der einteiligen zweiten Hälfte (106, 404) des Verbundwerkstoffdruckkörpers (102, 400) auf demselben Dorn (138, 206, 306) wie das Ablegen der einteiligen ersten Hälfte (104, 402) des Verbundwerkstoffdruckkörpers (102, 400) durchgeführt wird.

9. Verfahren nach einem der Ansprüche 1 bis 8, wobei (520) das Ablegen der einteiligen ersten Hälfte (104, 402) denselben Ablegepfad wie das Ablegen der einteiligen zweiten Hälfte (106, 404) nutzt.

10. Verfahren (500) nach einem der Ansprüche 1 bis 9, wobei der Ring (418) ein Schweißring oder ein Schnittstellenring ist.

11. Verfahren (500) nach Anspruch 10, wobei der Schnittstellenring (418) eine Anzahl von Positionen aufweist, um Eingaben und Ausgaben mit einer Umgebung außerhalb des Verbundwerkstoffdruckkörpers (102, 400) zu empfangen.

12. Verbundwerkstoffdruckkörper (102, 400), aufweisend:
eine einteilige erste Hälfte (104, 402) des Verbundwerkstoffdruckkörpers (102, 400), aufweisend einen Kuppelabschnitt (108, 202, 408) und einen zylindrischen Abschnitt (110, 204, 408) mit einem Übergangsbereich (112, 205, 410), der eine Verbindung (114) aufweist, die während des Ablegens zwischen dem Kuppelabschnitt (108, 202, 408) und dem zylindrischen Abschnitt (110, 204, 408) gebildet ist; und
eine einteilige zweite Hälfte (106, 404) des Verbundwerkstoffdruckkörpers (102, 400), aufweisend einen zweiten Kuppelabschnitt (116, 412) und einen zweiten zylindrischen Abschnitt (118, 414) mit einem zweiten Übergangsbereich (120, 416), der eine zweite Verbindung (122) aufweist, die während des Ablegens zwischen dem zweiten Kuppelabschnitt (116, 412) und dem zweiten zylindrischen Abschnitt (118, 414) gebildet ist;
einen Ring (166, 418), der geklebt ist zwischen oder mechanisch befestigt ist an dem zylindrischen Abschnitt (110, 204, 408) und dem zweiten zylindrischen Abschnitt (118, 414), wobei der Ring (166, 418) Metall aufweist.

13. Verbundwerkstoffdruckkörper (102, 400) nach Anspruch 12, wobei der Übergangsbereich (112, 205, 410) zylindrische Lagen (124, 210) des zylindrischen Abschnitts (110, 204, 408) und Kuppellagen (126, 208) des Kuppelabschnitts (108, 202, 408) aufweist.

14. Verbundwerkstoffdruckkörper (102, 400) nach Anspruch 12 oder 13, wobei die einteilige erste Hälfte (104, 402) dasselbe Ablegedesign wie die einteilige zweite Hälfte (106, 404) aufweist.

15. Verbundwerkstoffdruckkörper (102, 400) nach einem der Ansprüche 12 bis 14, wobei der Ring (166) eine Vielzahl von Löchern (172) aufweist, um auf ein Inneres des Verbundwerkstoffdruckkörpers (102) zuzugreifen.

## Revendications

1. Procédé (500) permettant de former une coque composite sous pression (102, 400) comprenant :
la disposition (502) d'une première moitié unitaire (104, 402) de la coque composite sous pression (102, 400) ;
la disposition (504) d'une seconde moitié unitaire (106, 404) de la coque composite sous pression (102, 400) ; et
la jonction (506) de la première moitié unitaire (104, 402) à la seconde moitié unitaire (106, 404) pour former la coque composite sous pression (102, 400), dans lequel (522) la jonction de la première moitié unitaire (104, 402) à la seconde moitié unitaire (106, 404) comprend l'adhésion ou la fixation mécanique d'un anneau (166, 418) à la fois à la première moitié unitaire (104, 402) et à la seconde moitié unitaire (106, 404), dans lequel l'anneau (418) comprend un métal.

2. Procédé (500) selon la revendication 1, dans lequel (506) la disposition de la première moitié unitaire (104, 402) de la coque composite sous pression (102, 400) comprend la disposition d'une partie
cylindrique (110, 204, 408) et d'une partie dôme (108, 202, 408) sur un mandrin (138, 206, 306) pour former une demi-capsule (136) sur le mandrin (138, 206, 306).

3. Procédé (500) selon la revendication 2, dans lequel (508) la disposition de la partie cylindrique (110, 204, 408) et de la partie dôme (108, 202, 408) comprend la formation d'une région de transition (112, 205, 410) comprenant un joint (114) entre la partie cylindrique (110, 204, 408) et la partie dôme (108, 202, 408).

4. Procédé (500) selon la revendication 3, dans lequel (510) la formation de la région de transition (112, 205, 410) comprend la disposition alternée de plis cylindriques (124, 210) et de plis de dôme (126, 208) pour former le joint (114).

5. Procédé (500) selon l'une quelconque des revendications 2 à 4, dans lequel (512) la disposition de la première moitié unitaire (104, 402) de la coque composite sous pression (102, 400) comprend la disposition de chaque pli cylindrique de la partie cylindrique (110, 204, 408) en une pluralité de chemins alternés (144), dans lequel chaque chemin de la pluralité de chemins alternés (144) comprend une pluralité de câbles (146).

6. Procédé selon l'une quelconque des revendications 2 à 5, dans lequel (511) la disposition de la partie cylindrique (110, 204, 408) et de la partie dôme (108, 202, 408) comprend une seule tête de disposition de fibres automatisée (148) disposant alternativement des ensembles de plis de dôme (128, 308) et des ensembles de plis cylindriques (130, 302).

7. Procédé (500) selon l'une quelconque des revendications 1 à 6, dans lequel (514) la disposition de la seconde moitié unitaire (106, 404) de la coque composite sous pression comprend la disposition d'une seconde partie cylindrique et d'une seconde partie dôme sur un mandrin.

8. Procédé (500) selon l'une quelconque des revendications 1 à 7, dans lequel (518) la disposition de la seconde moitié unitaire (106, 404) de la coque composite sous pression (102, 400) est effectuée sur un même mandrin (138, 206, 306) que la disposition de la première moitié unitaire (104, 402) de la coque composite sous pression (102, 400).

9. Procédé selon l'une quelconque des revendications 1 à 8, dans lequel (520) la disposition de la première moitié unitaire (104, 402) utilise un même chemin de disposition que la disposition de la seconde moitié unitaire (106, 404).

10. Procédé (500) selon l'une quelconque des revendications 1 à 9, dans lequel l'anneau (418) est un anneau d'assemblage mécanosoudé ou un anneau d'interface.

11. Procédé (500) selon la revendication 10, dans lequel l'anneau d'interface (418) comprend un certain nombre d'emplacements pour recevoir des entrées et des sorties avec un environnement extérieur à la coque composite sous pression (102, 400).

12. Coque composite sous pression (102, 400) comprenant :
une première moitié unitaire (104, 402) de la coque composite sous pression (102, 400) comprenant une partie dôme (108, 202, 408) et une partie cylindrique (110, 204, 408) avec une région de transition (112, 205, 410) comprenant un joint (114) formé pendant la disposition entre la partie dôme (108, 202, 408) et la partie cylindrique (110, 204, 408) ; et
une seconde moitié unitaire (106, 404) de la coque composite sous pression (102, 400) comprenant une seconde partie dôme (116, 412) et une seconde partie cylindrique (118, 414) avec une seconde région de transition (120, 416) comprenant un second joint (122) formé pendant la disposition entre la seconde partie dôme (116, 412) et la seconde partie cylindrique (118, 414) ;
un anneau (166, 418) collé entre la partie cylindrique (110, 204, 408) et la seconde partie cylindrique (118, 414), ou mécaniquement fixé à celles-ci, dans lequel l'anneau (166, 418) comprend du métal.

13. Coque composite sous pression (102, 400) selon la revendication 12, dans laquelle la région de transition (112, 205, 410) comprend des plis cylindriques (124, 210) de la partie cylindrique (110, 204, 408) et des plis de dôme (126, 208) de la partie dôme (108, 202, 408).

14. Coque composite sous pression (102, 400) selon la revendication 12 ou 13, dans laquelle la première moitié unitaire (104, 402) a une même conception de disposition que la seconde moitié unitaire (106, 404).

15. Coque composite sous pression (102, 400) selon l'une quelconque des revendications 12 à 14, dans laquelle l'anneau (166) comprend une pluralité de trous (172) pour accéder à l'intérieur de la coque composite sous pression (102).
